# EUROPEAN PATENT APPLICATION

(11) **EP 4 779 193 A1**
(43) Date of publication of application: **22.07.2026**
(21) Application number: 25163730.2
(22) Date of filing: 14.03.2025
(51) Int. Cl.: F16M 11/10, F16M 11/12, F16M 13/02, F16B 2/10, F16M 11/20, G08B 13/196

(54) **ADJUSTABLE MULTIFUNCTIONAL HOLDER**

(30) Priority: 17.01.2025 US 202519028439
(71) Applicant: Guangdong Shuowei Technology Co., Ltd, Dongguan City, Guangdong Province (CN)
(72) Inventor: Ma, Wenhong, Guangdong (CN); Luo, Lei, Guangdong (CN); Xia, Hui, Guangdong (CN); Liu, Lei, Guangdong (CN)
(74) Representative: Izquierdo Blanco, Maria Alicia

(57) **Abstract**

An adjustable multifunctional holder comprising a horizontal adjustment main part, a vertical adjustment carrier and a horizontal adjustment adapter, a first tooth disc is arranged on one side of one end of the horizontal adjustment main part, and a first tooth socket is arranged at the bottom of the horizontal adjustment main part; the horizontal adjustment main part can be adjusted in a wide range of 360 degrees on a fixing part, and the vertical adjustment carrier can be adjusted at an angle of no less than 180 degrees relative to the horizontal adjustment main part; the horizontal adjustment adapter can be adjusted by 360 degrees; the fixing part can be used independently, and the horizontal adjustment main part, the vertical adjustment carrier and the horizontal adjustment adapter can also be connected with the holder other than the fixing part.

## Description

The utility model relates to the technical field of electronic product holders, in particular to an adjustable multifunctional holder.

In brief, electronic product holder is a device used to holder an electronic product. It can fix the electronic product in a certain position, so that the user can easily view and operate the electronic product screen without holding the electronic product. However, the existing electronic product holder still has the following deficiencies in use:
currently, the holders used to holder electronic products in bicycle, motorcycle or other scenes are complicated in structure, the assembly process is cumbersome and slow, the angle adjustment range is small, and the use effect is not ideal.

To achieve the above purpose, the utility model provides the following technical proposal: an adjustable multifunctional holder comprises a horizontal adjustment main part, a vertical adjustment carrier and a horizontal adjustment adapter, wherein an angle adjustable vertical adjustment carrier is movably arranged at one end of the horizontal adjustment main part, and an angle adjustable horizontal adjustment adapter is movably arranged at one end of the vertical adjustment carrier.

As a preferred technical proposal of the utility model, a first tooth disc is arranged on one side of the horizontal adjustment main part, a first tooth socket is arranged at the bottom of the horizontal adjustment main part, a second tooth socket meshed with the first tooth disc is arranged on one side of one end of the vertical adjustment carrier, a plurality of tooth blocks are arranged at the top of the other end of the vertical adjustment carrier, a third tooth socket meshed with the tooth blocks is arranged at the bottom of the horizontal adjustment adapter, a first gasket is arranged inside the first tooth socket, and a first screw with one end passing through the first gasket is arranged inside the first tooth disc.

As a preferred technical proposal of the utility model, a second gasket is arranged inside the second tooth socket, and a second screw with one end passing through the second gasket and screwed into the first tooth socket is arranged inside one end of the vertical adjustment carrier.

As a preferred technical proposal of the utility model, a plurality of tooth blocks arranged at the top of one end of the vertical adjustment carrier are distributed annularly, and a positioning circular table is also arranged at the top of one end of the vertical adjustment carrier.

As a preferred technical proposal of the utility model, a positioning slot sleeved with the positioning circular table is arranged at the bottom of the horizontal adjustment adapter, a first square table is arranged at the top of the horizontal adjustment adapter, and a third screw with one end passing through the positioning circular table and the positioning slot and screwed into the first square table is arranged inside one end of the vertical adjustment carrier.

As a preferred technical proposal of the utility model, opposite ends of the horizontal adjustment main part and the vertical adjustment carrier are disc-shaped, and one end of the vertical adjustment carrier far away from the horizontal adjustment main part and the horizontal adjustment adapter are disc-shaped.

As a preferred technical proposal of the utility model, the adjustable multifunctional holder also comprises a fixing part, a second tooth disc meshed with the first tooth socket is arranged at the top of the fixing part, and one end of the first screw far away from the horizontal adjustment main part is screwed into the second tooth disc.

As a preferred technical proposal of the utility model, the fixing part comprises an upper hoop and a lower hoop, one end of the upper hoop and the lower hoop is connected through a pin, and the other end thereof is locked by a fourth screw.

As a preferred technical proposal of the utility model, the second tooth disc is arranged at the top of the upper hoop, and a second square table is also arranged at the top of the second tooth disc.

As a preferred technical proposal of the utility model, hexagon screw slots are arranged at one end the first screw, the second screw, the third screw and the fourth screw.

Compared with the prior art, the utility model provides an adjustable multifunctional holder, which has the following beneficial effects:
the horizontal adjustment main part of the adjustable multifunctional holder can be adjusted in a wide range of 360 degrees on a fixing part, and the vertical adjustment carrier can be adjusted at an angle of no less than 180 degrees relative to the horizontal adjustment main part, greatly increasing the angle adjustable range; the horizontal adjustment adapter can be adjusted by 360 degrees, further increasing the angle adjustable range of the product and meeting the needs of users from different angles;
the fixing part can be used independently, and the horizontal adjustment main part, the vertical adjustment carrier and the horizontal adjustment adapter can also be connected with the holder other than the fixing part, greatly increasing the application scenarios of the product, realizing multi-functional use and ensuring the usability of the product.

One or more embodiments are exemplarily described according to corresponding drawings. These exemplary description and drawings do not constitute a restriction on the embodiments. Elements having the same reference signs are shown as similar elements. Drawings do not constitute a scale restriction.
Fig. 1 is the structure diagram for the horizontal adjustment main part, the vertical adjustment carrier and the horizontal adjustment adapter of an adjustable multifunctional holder proposed by the utility model.
Fig. 2 is the structure diagram of an adjustable multifunctional holder proposed by the utility model.
Fig. 3 is the structural bottom view of an adjustable multifunctional holder proposed by the utility model.
Fig. 4 is the structural side view of an adjustable multifunctional holder proposed by the utility model.
Fig. 5 is the structural explosive view of an adjustable multifunctional holder proposed by the utility model.
Fig. 6 is the structural explosive side view of an adjustable multifunctional holder proposed by the utility model.
Fig. 7 is the structural explosive bottom view of an adjustable multifunctional holder proposed by the utility model.

Reference signs: 1. Horizontal adjustment main part; 11. First tooth disc; 12. First tooth socket; 13. First screw; 14. First gasket; 2. Vertical adjustment carrier; 21. Second tooth socket; 22. Tooth block; 23. Second gasket; 24. Second screw; 25. Third screw; 26. Positioning circular table; 3. Horizontal adjustment adapter; 31. First square table; 32. Third tooth socket; 33. Positioning slot; 4. Fixing part; 41. Upper hoop; 42. Lower hoop; 43. Pin; 44. Fourth screw; 45. Second tooth disc; 46. Second square table; 5. Hexagon screw slot.

To understand the characteristics and technical content of the utility model in more detail, the embodiments are described in detail in combination with the drawings. The drawings are for reference purpose only, but not intended to limit the embodiments of the utility model. In the following technical description, for ease of explanation, a number of details are provided for a full understanding of the disclosed embodiments. However, in the absence of these details, one or more embodiments may still be implemented. In other cases, familiar structures and devices may be presented simplistically to simplify the drawings.

The terms such as "first" and "second" in the specification and claims of the utility model and in the drawings are used to distinguish similar objects and are not necessarily used to describe a particular order or sequence. It should be understood that the data used in this way are interchangeable for the description of embodiments herein where appropriate. Furthermore, the terms "comprising" and "having" and any variations thereof are intended to cover non-exclusive inclusion.

In the embodiments of the utility model, the orientation or position relations indicated by the terms "upper", "lower", "inner", "inside", "outer", "front" and "rear" are based on the orientation or position relations shown in the drawings. These terms are mainly intended to better describe the embodiments of the utility model and their embodiments, but not intended to specify that the indicated device, element or component must have a particular orientation or be constructed and operated in a particular orientation. Moreover, some of the above terms may be used to indicate other meanings in addition to orientation or position relations, for example, the term "upper" may also be used to indicate a dependency or connection relation in some cases. Ordinary technicians in the field may understand the specific meanings of these terms in the embodiments of the utility model on a case-by-case basis.

In addition, the terms "arranged", "connected" and "fixed" should be understood in a broad sense. For example, "connected" may be fixedly connected, removably connected or integrally constructed; it may be mechanically connected or electrically connected; it may be directly connected, or indirectly connected through an intermediary, or internally connected between two devices, elements or components. Ordinary technicians in the field may understand the specific meanings of the above terms in the embodiments of the utility model on a case-by-case basis.

It should be noted that the embodiments in the utility model and the features in the embodiments may be combined with each other without conflict.

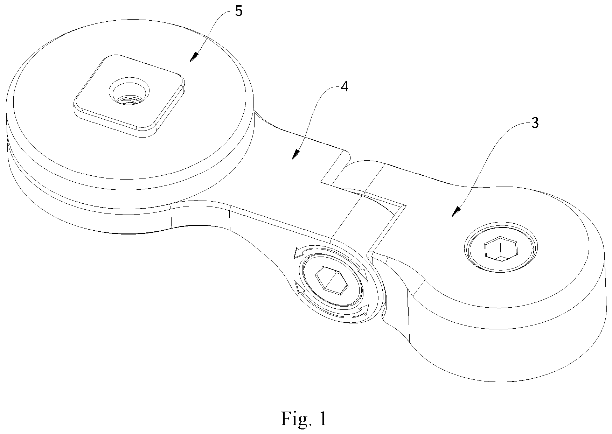

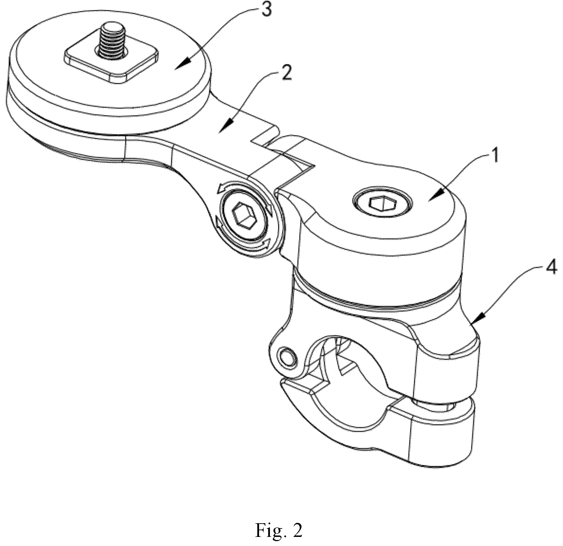

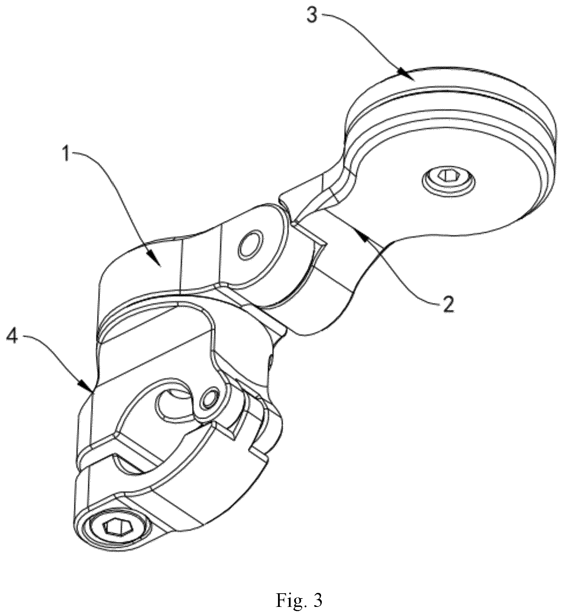

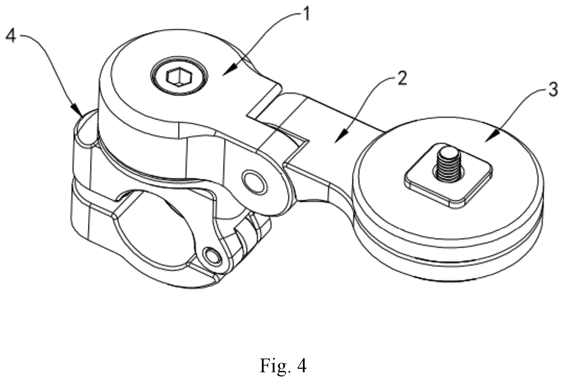

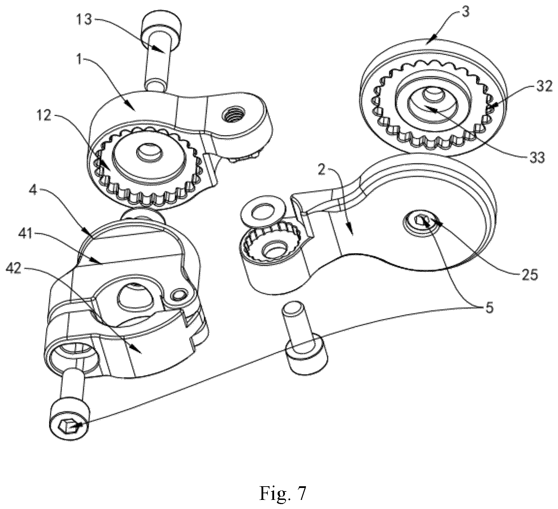

As shown in Fig. 1 to Fig. 7, an adjustable multifunctional holder comprises a horizontal adjustment main part 1, a vertical adjustment carrier 2 and a horizontal adjustment adapter 3, wherein an angle adjustable vertical adjustment carrier 2 is movably arranged at one end of the horizontal adjustment main part 1, and an angle adjustable horizontal adjustment adapter 3 is movably arranged at one end of the vertical adjustment carrier 2.

As a specific technical proposal of the embodiment, a first tooth disc 11 is arranged on one side of the horizontal adjustment main part 1, a first tooth socket 12 is arranged at the bottom of the horizontal adjustment main part 1, a second tooth socket 21 meshed with the first tooth disc 11 is arranged on one side of one end of the vertical adjustment carrier 2, a plurality of tooth blocks 22 are arranged at the top of the other end of the vertical adjustment carrier 2, a third tooth socket 32 meshed with the tooth blocks 22 is arranged at the bottom of the horizontal adjustment adapter 3, a first gasket 14 is arranged inside the first tooth socket 12, and a first screw 13 with one end passing through the first gasket 14 is arranged inside the first tooth disc 11.

In the embodiment, when the first tooth socket 12 is meshed with the first tooth disc 11, the top of the first tooth disc 11 props against the first gasket 14, which can effectively prevent the first screw 13 from loosening by increasing the friction force, balancing the load and filling the thread gap.

As a specific technical proposal of the embodiment, a second gasket 23 is arranged inside the second tooth socket 21, and a second screw 24 with one end passing through the second gasket 23 and screwed into the first tooth socket 11 is arranged inside one end of the vertical adjustment carrier 2.

In the embodiment, the second gasket 23 can prevent the second screw 24 from loosening, both the second gasket 23 and the first gasket 14 are rubber gaskets or steel gaskets with notches or other gaskets with the same effect, and the vertical adjustment carrier 2 can be moved by loosening the second screw 24 with a hexagonal screwdriver, so that the second tooth socket 21 is disengaged with the first tooth disc 1; the user adjusts the angle by rotating the vertical adjustment carrier 2, makes the second tooth socket 21 meshed with first tooth disc 1, and then locks the second screw 24, thus realizing simple and quick operation.

As a specific technical proposal of the embodiment, a plurality of tooth blocks 22 arranged at the top of one end of the vertical adjustment carrier 2 are distributed annularly, and a positioning circular table 26 is also arranged at the top of one end of the vertical adjustment carrier 2.

In the embodiment, a plurality of tooth blocks 22 ensures the connection stability between the vertical adjustment carrier 2 and the horizontal adjustment adapter 3; when part of the tooth blocks 22 are worn and damaged, the remaining tooth blocks 22 can still stably lock the horizontal adjustment adapter 3.

As a specific technical proposal of the embodiment, a positioning slot 33 sleeved with the positioning circular table 26 is arranged at the bottom of the horizontal adjustment adapter 3, a first square table 31 is arranged at the top of the horizontal adjustment adapter 3, and a third screw 25 with one end passing through the positioning circular table 26 and the positioning slot 33 and screwed into the first square table 31 is arranged inside one end of the vertical adjustment carrier 2.

In the embodiment, the positioning circular table 26 is matched with the positioning slot 33, so that the horizontal adjustment adapter 3 keeps coaxially opposite to one end of the vertical adjustment carrier 2, being more beautiful in appearance and more stable in connection; the first square table 31 ensures that a mobile phone and a tablet computer holder can be connected; the horizontal adjustment adapter 3 can be locked through the third screw 25, and the third screw 25 can be screwed into the mobile phone and the tablet computer holder to connect the horizontal adjustment adapter 3, the mobile phone and the tablet computer holder together, achieving a simple and compact structure, having economic benefits and being simpler to operate; the tooth blocks 22 are separated from the third tooth socket 32 by loosening the third screw 25 with the hexagonal screwdriver, so that the user can rotate the horizontal adjustment adapter 3 for angle adjustment and then lock the third screw 25.

As a specific technical proposal of the embodiment, opposite ends of the horizontal adjustment main part 1 and the vertical adjustment carrier 2 are disc-shaped, and one end of the vertical adjustment carrier 2 far away from the horizontal adjustment main part 1 and the horizontal adjustment adapter 3 are disc-shaped.

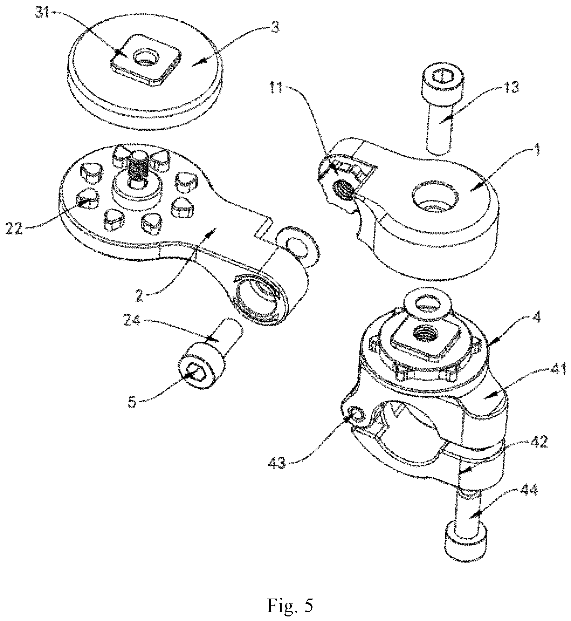

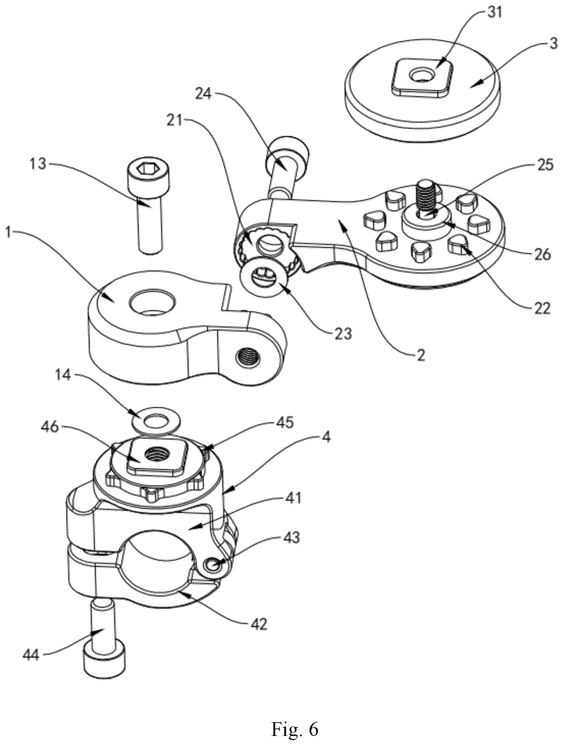

In the embodiment, as shown in Fig. 5 and Fig. 6, the opposite ends of the horizontal adjustment main part 1 and the vertical adjustment carrier 2 are disc-shaped, so that the vertical adjustment carrier 2 can be rotated up and down by no less than 180 degrees relative to the horizontal adjustment main part 1, and the angle adjustment range is larger, meeting the viewing angle requirements of the user and being more convenient to use; one end of the vertical adjustment carrier 2 far away from the horizontal adjustment main part 1 and the horizontal adjustment adapter 3 are disc-shaped, so that the horizontal adjustment adapter 3 can be rotated by360 degrees on the vertical adjustment carrier 2, meeting the angle adjustment requirements of the user.

As a specific technical proposal of the embodiment, the adjustable multifunctional holder also comprises a fixing part 4, a second tooth disc 45 meshed with the first tooth socket 12 is arranged at the top of the fixing part 4, and one end of the first screw 13 far away from the horizontal adjustment main part 1 is screwed into the second tooth disc 45.

In the embodiment, the second tooth disc 45 is separated from the first tooth socket 12 by loosening the first screw 13 with the hexagonal screwdriver, then the horizontal adjustment main part 1 can be rotated to adjust the angle by 360 degrees, and the angle adjustment range is large, being more convenient to use.

As a specific technical proposal of the embodiment, the fixing part 4 comprises an upper hoop 41 and a lower hoop 42, one end of the upper hoop 41 and the lower hoop 42 is connected through a pin 43, and the other end thereof is locked by a fourth screw 44.

In the embodiment, the upper hoop 41 and lower hoop 42 can be opened by loosening the fourth screw 44 with the hexagonal screwdriver to connect with handlebars of a bicycle and a motorcycle, and then can be locked through the fourth screw 44; in the later stage, rubber pads can also be added to the interior of the upper hoop 41 and the lower hoop 42 to adapt to the handlebars of different sizes, and the first tooth socket at the bottom of the horizontal adjustment main part 1 can be connected to other types of holders for application in other scenarios, such as a vehicle center console, a motorboat and a yacht, being multifunctional.

As a specific technical proposal of the embodiment, the second tooth disc 45 is arranged at the top of the upper hoop 41, and a second square table 46 is also arranged at the top of the second tooth disc 45.

In the embodiment, the second square table 46 makes the fixing part 4 have the same function as the horizontal adjustment adapter 3, and can be directly connected with the mobile phone and the tablet computer holder, so that the fixing part 4 can be used independently from the horizontal adjustment main part 1, being multifunctional.

As a specific technical proposal of the embodiment, hexagon screw slots 5 are arranged at one end the first screw 13, the second screw 24, the third screw 25 and the fourth screw 44.

In the embodiment, the first screw 13, the second screw 24, the third screw 25 and the fourth screw 44 are installed and removed through the hexagonal screwdriver, so that the connection between the components is tighter, and the components are not loosened after angle adjustment and locking, improving the overall stability of the product.

During use, the upper hoop 41 and the lower hoop 42 can be opened by loosening the fourth screw 44 with the hexagonal screwdriver to connect with the handlebars of the bicycles and the motorcycle, and then can be locked through the fourth screw 44; the horizontal adjustment main part 1 is connected with the fixing part 4 after angle rotation, so that the first tooth socket 12 is meshed with the second tooth disc 45; finally, the first screw 13 is screwed to lock the horizontal adjustment main part 1 and the fixing part 4; the angle of the vertical adjustment carrier 2 is adjusted so that the first tooth disc 11 is meshed with the second tooth socket 21 and finally locked through the second screw 24; the relative angle of the horizontal adjustment adapter 3 and the upper and lower adjustment carrier 2 is adjusted, then the third tooth socket 32 is meshed with the tooth blocks 22 and locked through the third screw 25, and the mobile phone or tablet computer holder matched with the first square table 31 is connected for use.

To sum up, in the adjustable multifunctional holder, the horizontal adjustment main part 1 can be adjusted on the fixing part 4 in a wide range of 360 degrees, the vertical adjustment carrier 2 can be adjusted at an angle of no less than 180 degrees relative to the horizontal adjustment main part, and the angle adjustable range is greatly increased; moreover, the horizontal adjustment adapter 3 can also be adjusted by 360 degrees, further increasing the angle adjustable range of the product and meeting the requirements of the users from different perspectives; the fixing part 4 can be used independently, and the horizontal adjustment main part 1, the vertical adjustment carrier 2 and the horizontal adjustment adapter 3 can also be connected with the holder other than the fixing part, greatly increasing the application scenarios of the product, realizing multi-functional use and ensuring the usability of the product.

Although the embodiments of the utility model have been shown and described, it is understandable that the ordinary technicians in the field may change, modify, substitute and vary these embodiments in a variety of ways without deviating from the principle and spirit of the utility model, and the scope of the utility model is limited by the attached claims and their equivalents.

## Claims

1. An adjustable multifunctional holder, comprising a horizontal adjustment main part (1), a vertical adjustment carrier (2) and a horizontal adjustment adapter (3), wherein an angle adjustable vertical adjustment carrier (2) is movably arranged at one end of the horizontal adjustment main part (1), and an angle adjustable horizontal adjustment adapter (3) is movably arranged at one end of the vertical adjustment carrier (2).

2. The adjustable multifunctional holder according to claim 1, **characterized in that** a first tooth disc (11) is arranged on one side of the horizontal adjustment main part (1), a first tooth socket (12) is arranged at the bottom of the horizontal adjustment main part (1), a second tooth socket (21) meshed with the first tooth disc (11) is arranged on one side of one end of the vertical adjustment carrier (2), a plurality of tooth blocks (22) are arranged at the top of the other end of the vertical adjustment carrier (2), a third tooth socket (32) meshed with the tooth blocks (22) is arranged at the bottom of the horizontal adjustment adapter (3), a first gasket (14) is arranged inside the first tooth socket (12), and a first screw (13) with one end passing through the first gasket (14) is arranged inside the first tooth disc (11).

3. The adjustable multifunctional holder according to claim 2, **characterized in that** a second gasket (23) is arranged inside the second tooth socket (21), and a second screw (24) with one end passing through the second gasket (23) and screwed into the first tooth socket (11) is arranged inside one end of the vertical adjustment carrier (2).

4. The adjustable multifunctional holder according to claim 1, **characterized in that** a plurality of tooth blocks (22) arranged at the top of one end of the vertical adjustment carrier (2) are distributed annularly, and a positioning circular table (26) is also arranged at the top of one end of the vertical adjustment carrier (2).

5. The adjustable multifunctional holder according to claim 1, **characterized in that** a positioning slot (33) sleeved with the positioning circular table (26) is arranged at the bottom of the horizontal adjustment adapter (3), a first square table (31) is arranged at the top of the horizontal adjustment adapter (3), and a third screw (25) with one end passing through the positioning circular table (26) and the positioning slot (33) and screwed into the first square table (31) is arranged inside one end of the vertical adjustment carrier (2).

6. The adjustable multifunctional holder according to claim 1, **characterized in that** opposite ends of the horizontal adjustment main part (1) and the vertical adjustment carrier (2) are disc-shaped, and one end of the vertical adjustment carrier (2) far away from the horizontal adjustment main part (1) and the horizontal adjustment adapter (3) are disc-shaped.

7. The adjustable multifunctional holder according to claim 2, **characterized by** also comprising a fixing part (4), a second tooth disc (45) meshed with the first tooth socket (12) is arranged at the top of the fixing part (4), and one end of the first screw (13) far away from the horizontal adjustment main part (1) is screwed into the second tooth disc (45).

8. The adjustable multifunctional holder according to claim 7, **characterized in that** the fixing part (4) comprises an upper hoop (41) and a lower hoop (42), one end of the upper hoop (41) and the lower hoop (42) is connected through a pin (43), and the other end thereof is locked by a fourth screw (44).

9. The adjustable multifunctional holder according to claim 7, **characterized in that** the second tooth disc (45) is arranged at the top of the upper hoop (41), and a second square table (46) is also arranged at the top of the second tooth disc (45).

10. The adjustable multifunctional holder according to claim 2, **characterized in that** hexagon screw slots (5) are arranged at one end the first screw (13), the second screw (24), the third screw (25) and the fourth screw (44).
